(19) Europäisches Patentamt
European Patent Office
Office européen des brevets

(11) **EP 4 177 795 B1**

(12) **EUROPEAN PATENT SPECIFICATION**

(45) Date of publication and mention of the grant of the patent:
**17.09.2025 Bulletin 2025/38**

(21) Application number: **20943251.7**

(22) Date of filing: **01.07.2020**

(51) International Patent Classification (IPC):
*G06N 3/0464* (2023.01)  *G06N 3/063* (2023.01)
*G06V 10/82* (2022.01)  *G06V 20/70* (2022.01)

(52) Cooperative Patent Classification (CPC):
**G06N 3/063; G06N 3/0464; G06V 10/82; G06V 20/70**

(86) International application number:
**PCT/JP2020/025798**

(87) International publication number:
**WO 2022/003855 (06.01.2022 Gazette 2022/01)**

(54) **DATA PROCESSING DEVICE AND DATA PROCESSING METHOD**

DATENVERARBEITUNGSVORRICHTUNG UND DATENVERARBEITUNGSVERFAHREN

DISPOSITIF DE TRAITEMENT DE DONNÉES ET PROCÉDÉ DE TRAITEMENT DE DONNÉES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**10.05.2023 Bulletin 2023/19**

(73) Proprietor: **Nippon Telegraph And Telephone Corporation**
**Chiyoda-ku**
**Tokyo 100-8116 (JP)**

(72) Inventors:
• **HATTA, Saki**
**Musashino-shi, Tokyo 180-8585 (JP)**

• **UZAWA, Hiroyuki**
**Musashino-shi, Tokyo 180-8585 (JP)**
• **YOSHIDA, Shuhei**
**Musashino-shi, Tokyo 180-8585 (JP)**
• **NITTA, Koyo**
**Musashino-shi, Tokyo 180-8585 (JP)**

(74) Representative: **Samson & Partner Patentanwälte mbB**
**Widenmayerstraße 6**
**80538 München (DE)**

(56) References cited:
**EP-A1- 3 640 858**    **JP-B1- 6 528 884**
**JP-B1- 6 528 893**    **JP-B2- 6 540 725**

## Description

[Technical Field]

The present invention relates to a data processor and a data processing method, and particularly, to a data processor and a data processing method using a multilayered neural network.

[Background Art]

Various data processing technologies using a multilayered neural network and deep learning have been developed. The application range thereof is widespread in various fields such as recognition and detection. For example, object detection is a technology of detecting, from an input image, metadata including a location (a square frame surrounding an object) and an attribute (an object type such as a person or a car) of an object involved in the image and detection accuracy of each object. Regarding object detection, You Only Look Once (YOLO) (NPL 1), Single Shot Multibox Detector (SSD) (NPL 2), and the like in which metadata is detected based on results of deep learning have been disclosed in recent years, and application thereof to object detection systems that require real-time performance such as autonomous driving and surveillance cameras is under discussion.

From the viewpoint of network traffic load balancing and security protection, installation of an object detection device such as autonomous driving and a surveillance camera at the edge of a network, that is, on a terminal side is also under discussion. In order to install an object detection device at the edge of a network, it is indispensable to reduce the size and power consumption of the device.

In order to realize miniaturization and low power consumption, a configuration in which object detection processing based on deep learning is implemented by hardware and a data bit width handled by an arithmetic unit is reduced has been proposed (NPL 3). Generally, when deep learning inference processing is executed through software, each piece of data (an input, an output, a weight, or a bias) used in a product-sum operation is treated as 32-bit floating point data. This is because a range that each data value can take is wide, and the range is different for each image and each layer such as a convolutional layer constituting a convolutional neural network. In NPL 3, it is reported that the effect of reducing a circuit scale and power can be obtained by determining a data bit width in each layer of a convolutional neural network in advance using statistical information and reducing it to 8 to 16 bits.

[Citation List]

EP 3 640 858 A1 discloses a method of quantizing parameters of a neural network including calculating, for each of the parameters, a bit shift value indicating a degree outside a bit range of a fixed-point format for quantizing the parameters, updating the fixed-point format based on the calculated bit shift values of the parameters, and quantizing parameters updated in a learning or inference process according to the updated fixed-point format.

[Non Patent Literature]

[NPL 1] Joseph Redmon et. al, "YOLOv3: An Incremental Improvement, "https://arxiv.org/abs/1804.02767
[NPL 2] Wei Liu et. al, "SSD: Single Shot MultiBox Detector", https://arxiv.org/pdf/1512.02325.pdf
[NPL 3] Zhisheng Li et. al, "Laius: An 8-Bit Fixed-Point CNN Hardware Inference Engine", 2017 IEEE International Symposium on Parallel and Distributed Processing with Applications and 2017 IEEE International Conference on Ubiquitous Computing and Communications (ISPA/IUCC), Guangzhou, 2017, pp. 143-150, doi: 10.1109/ISPA/IUCC.2017.00030.

[Summary of the Invention]

[Technical Problem]

However, when a data bit width has been reduced, detection accuracy may decrease. That is, even if the data bit width is determined using statistical information, an optimum data bit width is not always obtained for each image, and thus in the case of processing an image input to an object detection device in real time (video processing), detection accuracy may vary for each image.

With the approach of reducing a data bit width handled by an arithmetic unit in this way, processing accuracy is likely to vary depending on data that is a processing target even if the size and power consumption of a device can be reduced. The present invention has been made to solve the aforementioned problems, and an object thereof is to prevent significant deterioration from occurring in data processing results for each piece of data to be processed even if a data bit width is limited in order to realize miniaturization and low power consumption of a device.

[Means for Solving the Problem]

To accomplish the aforementioned object, the invention is defined in the appended independent claims. Embodiments of the invention are defined in the dependent claims.

[Effects of the Invention]

According to the present invention, it is possible to handle data in accordance with the type of the image data that is a processing target and a range of each piece of data used in a product-sum operation for each layer of a multilayered neural network, for example, even if a data width handled by an arithmetic unit is reduced because it is possible to change a range and a minimum step width of data by setting a decimal point position of N-bit fixed-length data. Accordingly, it is possible to avoid significant deterioration occurring in data processing results while realizing miniaturization and low power consumption of the device.

[Brief Description of Drawings]

[Fig. 1]

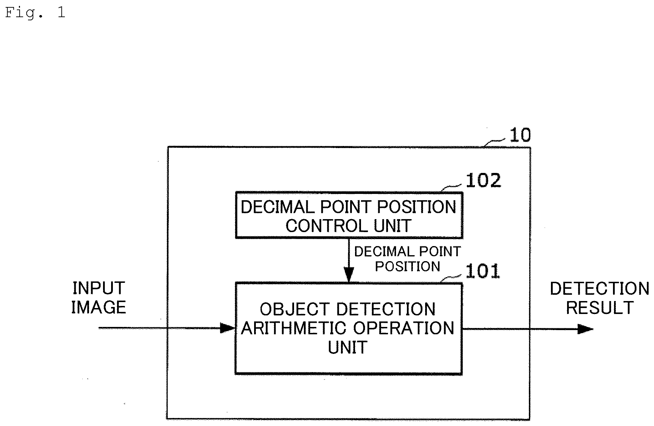

Fig. 1 is a block diagram illustrating a configuration of an object detection device according to a first embodiment of the present invention.
[Fig. 2]

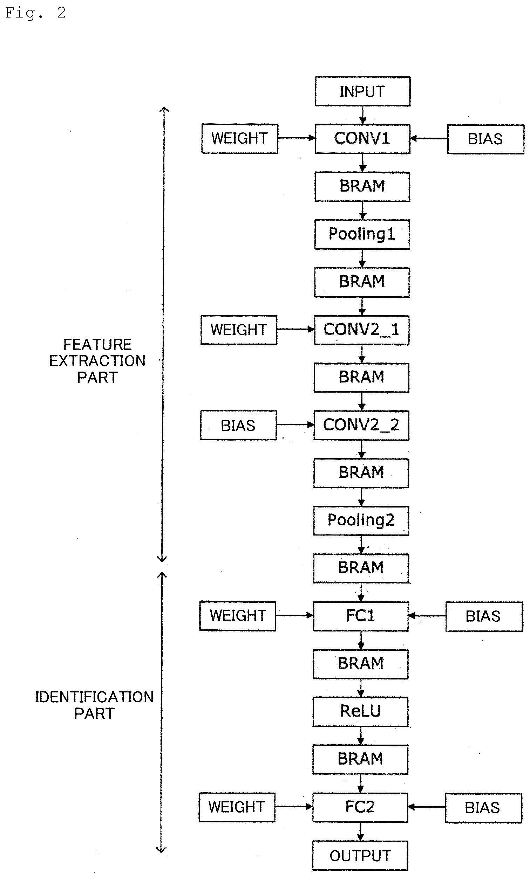

Fig. 2 is a diagram illustrating an overview of an object detection algorithm of the object detection device according to the first embodiment.
[Fig. 3]

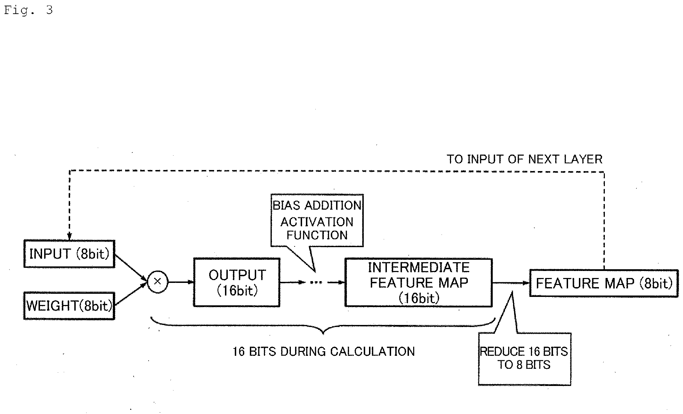

Fig. 3 is a diagram illustrating arithmetic processing performed by an object detection arithmetic operation unit of the object detection device according to the first embodiment.
[Fig. 4]

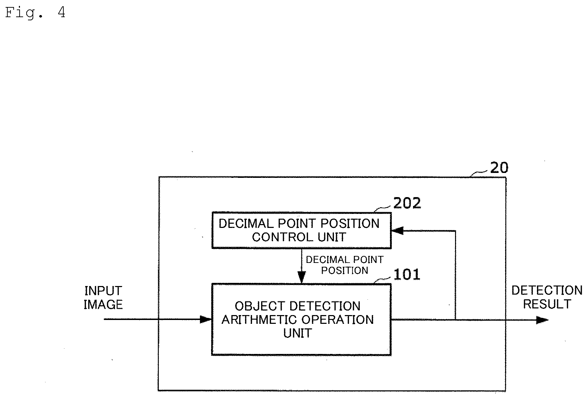

Fig. 4 is a block diagram illustrating a configuration of an object detection device according to a second embodiment of the present invention.
[Fig. 5]

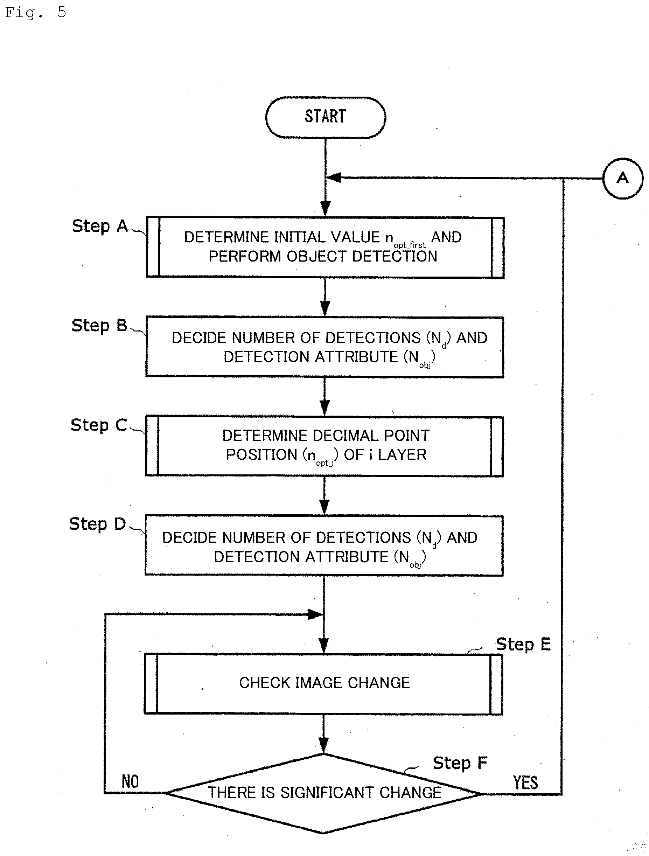

Fig. 5 is a flowchart illustrating an example of data processing performed by the object detection device according to the second embodiment.
[Fig. 6]

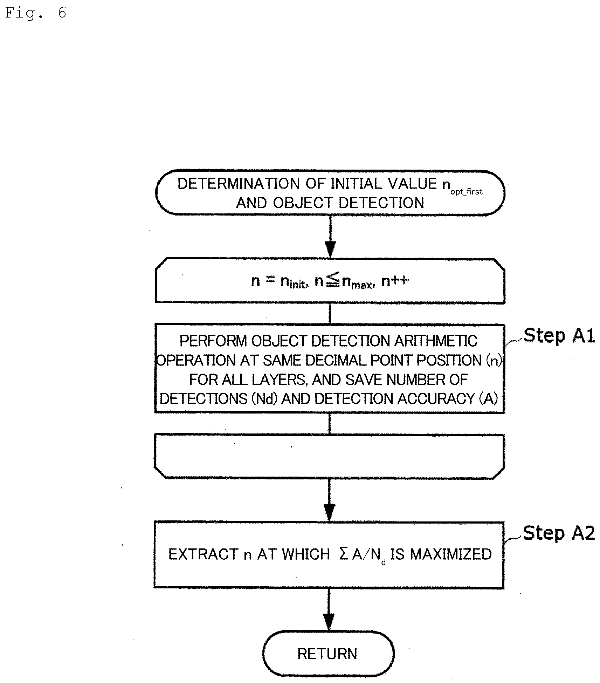

Fig. 6 is a flowchart illustrating an example of processing of determining an initial value of a decimal point position in data processing performed by the object detection device according to the second embodiment.
[Fig. 7]

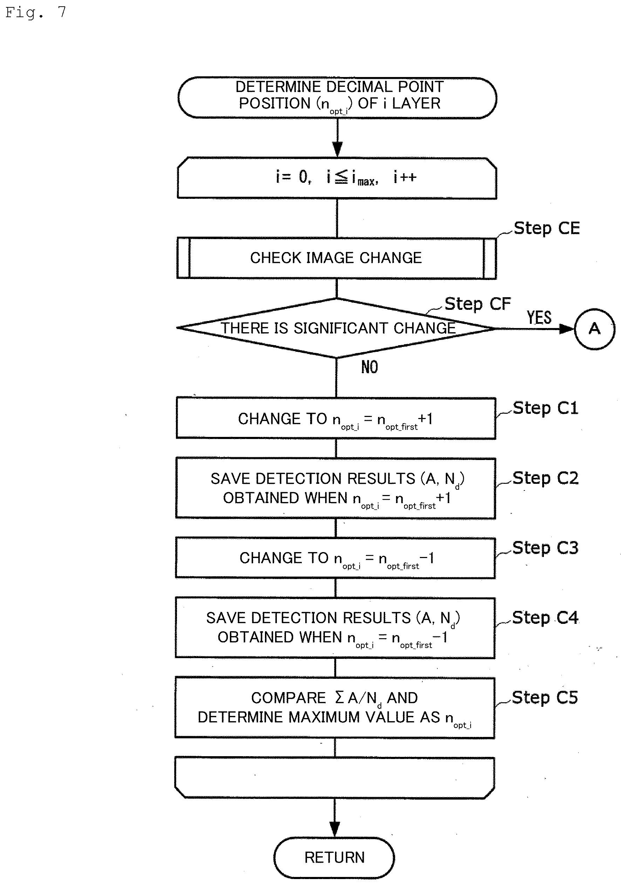

Fig. 7 is a flowchart illustrating an example of processing of determining a decimal point position for each layer in data processing performed by the object detection device according to the second embodiment.
[Fig. 8A]

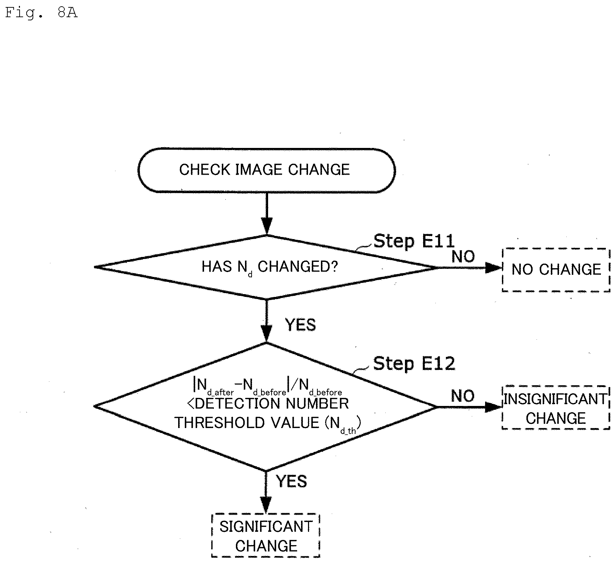

Fig. 8A is a flowchart illustrating an example of processing of detecting an image change.
[Fig. 8B]

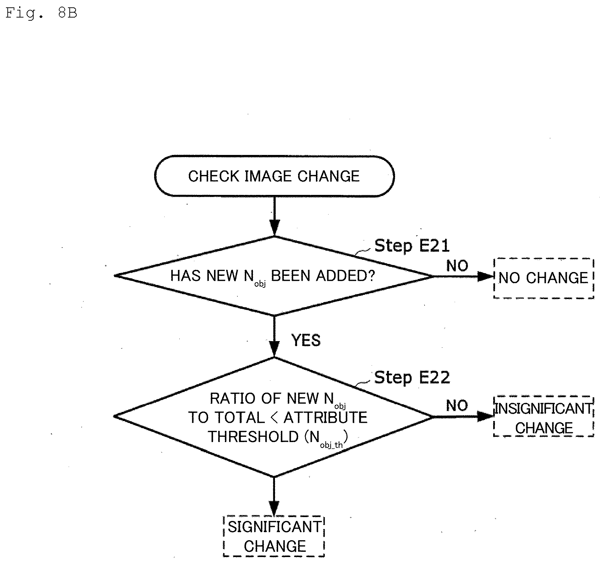

Fig. 8B is a flowchart illustrating another example of processing of detecting an image change.

[Fig. 9]

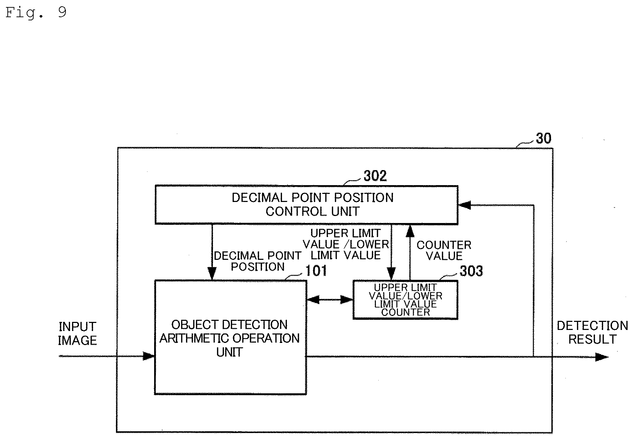

Fig. 9 is a block diagram illustrating a configuration of an object detection device according to a third embodiment of the present invention.
[Fig. 10]

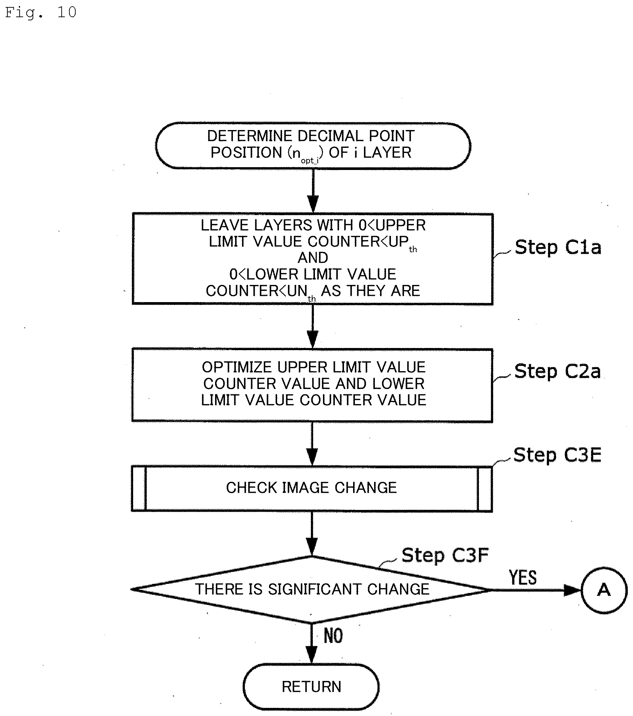

Fig. 10 is a flowchart illustrating an example of processing of determining a decimal point position for each layer in data processing performed by the object detection device according to the third embodiment.
[Fig. 11]

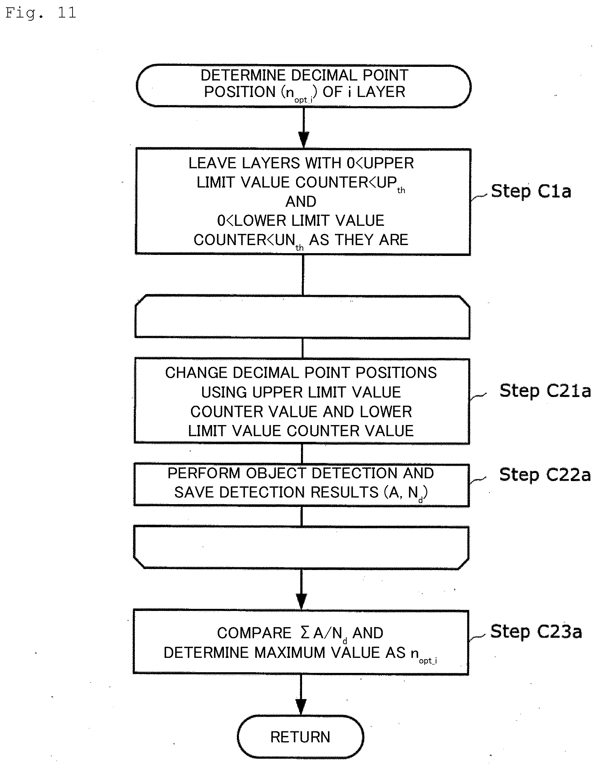

Fig. 11 is a flowchart illustrating an example of processing of determining a decimal point position for each layer in data processing performed by an object detection device according to a fourth embodiment of the present invention.
[Fig. 12]

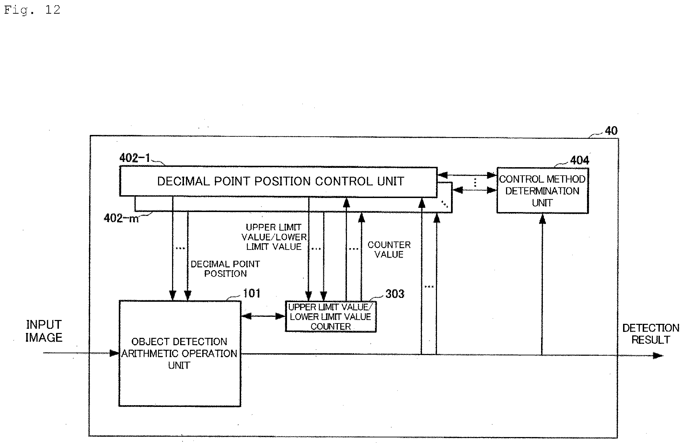

Fig. 12 is a block diagram illustrating a configuration of an object detection device according to a fifth embodiment of the present invention.
[Fig. 13]

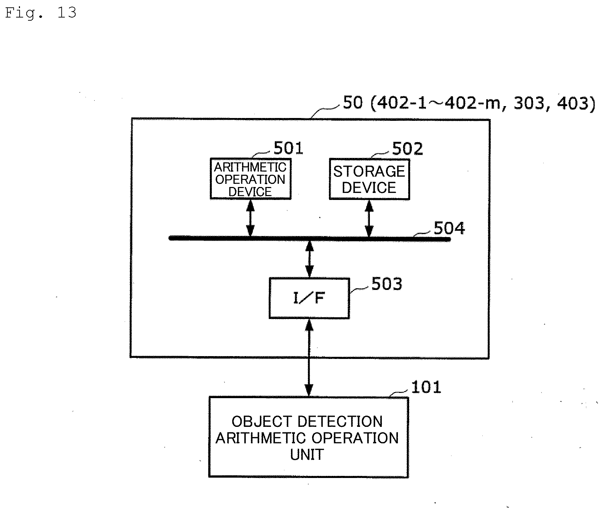

Fig. 13 is a diagram showing an example of a hardware configuration of a decimal point position control unit and a control method selection unit of the object detection device according to the fifth embodiment of the present invention.

[Description of Embodiments]

Hereinafter, a data processor according to an embodiment of the present invention will be described with reference to the drawings.

[First embodiment]

A data processor according to a first embodiment of the present invention is an object detection device that detects, from an input image, metadata including a location and an attribute of an object involved in the image and detection accuracy of each object. Here, the location of an object is represented by coordinates of the center of the object in the image or a square frame surrounding the object. In addition, the attribute is an object type such as a person or a car and may be called a category. In addition, the detection accuracy is, for example, a probability that a detected object has a specific attribute.

As shown in Fig. 1, the object detection device 10 according to the first embodiment includes an object detection arithmetic operation unit 101 configured to perform arithmetic processing based on deep learning inference processing on an input image, and a decimal point position control unit 102 that determines the position of a decimal point (hereinafter, simply referred to as a "decimal point position") of fixed-length data that is an arithmetic operation target in the object detection arithmetic operation unit 101.

[Object detection arithmetic operation unit 101]

The object detection arithmetic operation unit 101 is an arithmetic processing circuit configured to perform arithmetic processing corresponding to each of a plurality of layers constituting a multilayered neural network according to a processing algorithm of the multilayered neural network. Processing performed by the multilayered neural network in the object detection arithmetic operation unit 101 typically uses a convolutional neural network (CNN). Fig. 2 shows an example of a CNN. The CNN includes a "feature extraction part" in which convolutional layers (CONV1, CONV2_1, and CONV2_2) that perform "convolution (CONV)" processing for convoluting a predetermined filter on an input image, and pooling layers (Pooling1 and Pooling2) that perform "pooling" processing for downsizing a result of convolution processing are alternately disposed to create a feature map, and a "identification part" that includes a plurality of fully connected layers (FC: FC1 and FC2) and identifies an object involved in an image input from the feature map. In the feature extraction part, an arithmetic operation of convoluting a filter is performed on an image. Further, in the identification part, a product-sum operation that multiplies the value of each pixel of the feature map by a weight and takes the sum, and an arithmetic operation of biasing the result of the product-sum operation and inputting it to an activation function to obtain the output are repeated. As the activation function, a rectified linear unit (ReLU) or the like is used. Values of the weight and parameters of the activation function can be determined according to learning. Further, in Fig. 2, "BRAM" represents a block RAM storing arithmetic operation results in each layer.

The object detection arithmetic operation unit 101 performs a convolution arithmetic operation and connection processing of inference processing using an object detection algorithm based on deep learning, such as YOLO (NPL 1) or SSD (NPL 2), to output metadata such as an attribute of an object involved in an input image, the accuracy of the attribute, and a position. Since such an object detection arithmetic operation unit 101 executes many product-sum operations, it is often realized by using a multi-core CPU or a graphics processing unit (GPU). The object detection arithmetic operation unit 101 may be realized by, for example, a field programmable gate array (FPGA).

In the present embodiment, data handled by the object detection arithmetic operation unit 101 in each layer of the multilayered neural network, for example, an input, an output (feature map), a bias, a weight, and the like are fixed-length data having a bit width less than 32 bits and have a data structure in which the data can have different decimal point positions for respective layers. More specifically, in the present embodiment, the object detection arithmetic operation unit 101 performs arithmetic processing corresponding to each of a plurality of layers constituting the multilayered neural network on fixed-length data having a bit width of 8 bits, for example, and a decimal point position of data to be handled is set for each layer by the decimal point position control unit 102 which will be described later.

Fig. 3 shows a flow of a convolution arithmetic operation in the object detection arithmetic operation unit 101. For example, when an input is 8 bits and a weight is 8 bits, a result obtained by the product-sum operation is a maximum of 16 bits. The object detection arithmetic operation unit 101 adds a bias to the 16-bit calculation result and applies an activation function thereto to obtain a 16-bit intermediate feature map. Since the feature map becomes an input in the next layer, the 16-bit intermediate input map is reduced to an 8-bit width and used as a feature map for the next layer input. Meanwhile, the number of layers, the activation function, and the method of adding a bias are appropriately selected for each object detection algorithm to be used, and do not limit the present invention.

[Decimal point position control unit]

On the other hand, the decimal point position control unit 102 is a processing circuit that determines a decimal point position of fixed-length data that is an arithmetic operation target in the object detection arithmetic operation unit 101 for each of the plurality of layers constituting the multilayered neural network, as described above. In the present embodiment, a decimal point position of fixed-length data having a fixed bit width of 8 bits is fixedly set for each layer of object detection algorithm processing. In this case, the decimal point position control unit 102 includes a storage device that stores a preset decimal point position in association with each of the plurality of layers.

[Operation of object detection device 10]

In the object detection device 10 according to the present embodiment, the decimal point position control unit 102 sets a decimal point position of data with an 8-bit fixed length for each arithmetic operation corresponding to each of the plurality of layers constituting the multilayered neural network when the object detection arithmetic operation unit 101 performs arithmetic processing on an input image. By changing the decimal point position of the data with an 8-bit fixed length, the range and a minimum step width of the data can be changed.

According to the object detection device 10 according to the present embodiment, since a decimal point position of fixed-length data is set for each of the plurality of layers constituting the multilayered neural network, it is possible to handle data in accordance with the range of each piece of data used in a product-sum operation and other arithmetic processing for each type of data such as an image that is a processing target and each layer of the multilayered neural network, for example. Therefore, by reducing a data bit width of data handled by an arithmetic unit, for example, it is possible to significantly reduce a circuit scale as compared to a case in which all arithmetic operations are performed with 32-bit floating point numbers, to realize miniaturization and low power consumption of the device, and to avoid significant deterioration occurring in data processing results.

[Second embodiment]

An object detection device 20 according to a second embodiment of the present invention is an object detection device that detects, from an input image, metadata including a location and an attribute of an object involved in the input image, and detection accuracy of each object, like the above-described object detection device 10 according to the first embodiment.

Fig. 4 shows a configuration of the object detection device according to the second embodiment of the present invention. The object detection device 20 according to the second embodiment includes an object detection arithmetic operation unit 101 configured to perform arithmetic processing based on deep learning inference processing on an input image, and a decimal point position control unit 202 that determines a decimal point position of fixed-length data that is an arithmetic operation target in the object detection arithmetic operation unit 101. As a result of an arithmetic operation performed by the object detection arithmetic operation unit 101 according to an object detection algorithm, the location of an object, a detected attribute, and detection accuracy for the detected attribute are output as metadata to the outside of the device and to the decimal point position control unit 202.

A decimal point position of fixed-length data is fixedly set by the decimal point position control unit 102 for each layer of object detection algorithm processing in the object detection device 10 according to the first embodiment, whereas the decimal point position control unit 202 sets a decimal point position of fixed-length data corresponding to each layer based on the output of the object detection arithmetic operation unit 101, that is, object detection results from the multilayered neural network, and notifies the object detection arithmetic operation unit 101 of the decimal point position in the object detection device 20 according to the second embodiment of the present invention. The object detection arithmetic operation unit 101 changes the decimal point position of the fixed-length data corresponding to each of the plurality of layers constituting the multilayered neural network based on notification from the decimal point position control unit 202.

The object detection arithmetic operation unit 101 is the same as that of the first embodiment and thus it is denoted by the same reference numeral and detailed description thereof will be omitted.

Further, in the following description, a decimal point position of fixed-length data which is set corresponding to an i-th layer may be simply referred to as a "decimal point position of an i layer" (however, i is an integer greater than 0).

[Decimal point position control unit 202]

The decimal point position control unit 202 determines a decimal point position of each layer using metadata output from the object detection arithmetic operation unit. When an object in a video is detected, objects in continuously input images change little by little, and it is rare that all objects change in a short time. Therefore, in the object detection device 20 according to the present embodiment, the decimal point position control unit 202 does not control the decimal point position of each layer using a detection result of only one input image, and optimizes the decimal point position of each layer little by little by repeating processing of calculating the decimal point position of each layer using results of object detection for a plurality of input images.

[Overview of decimal point position control flow]

Fig. 5 shows an overview of a decimal point position control flow performed by the decimal point position control unit 202. In this flow, processing of determining an optimum decimal point position is roughly divided into two steps (step A and step C), and after the decimal point position is determined, it becomes processing (step E and step F) of waiting until there is a significant change in an image type or the like.

First, an initial value of a decimal point position (initial decimal point position $n_{opt\_first}$) is initially determined for each layer constituting the multilayered neural network, and object detection is performed using fixed-length data at a decimal point position set based on the initial value (step A). Then, a total number of object detections ($N_d$) obtained as a result of this object detection and a detection attribute ($N_{obj}$) such as "dog" or "human" are stored (step B).

Next, the decimal point position ($n_{opt\_i}$, 0 <i) of each layer is tuned to determine an optimum decimal point position (step C).

After tuning the decimal point position of each layer, the object detection arithmetic operation unit 101 is notified of the decimal point position of each layer, object detection processing is performed, and obtained object detection results ($N_d$, $N_{obj}$) are decided (step D). Thereafter, processing enters a waiting state for image change (step E and step F), image change checking (step E) is continued if there is no significant image change (step F: NO), and processing returns to step A to restart optimization processing if there is significant image change (step F: YES).

Processing of determining the initial decimal point position ($n_{opt\_first}$) (step A), determining a decimal point position ($n_{opt\_i}$) of the i layer (step C), and checking image change (step E) in the above-described decimal point position control flow will be described in detail below.

[Step A: Determination of initial decimal point position $(n_{opt\_first})$]

Fig. 6 shows a flow as an example of processing for determining the initial decimal point position $(n_{opt\_first})$. In this determination method, object detection is performed with a common range and minimum step width of fixed-length data used in arithmetic processing corresponding to each layer by using a common decimal point position for all layers while changing decimal point positions, and a decimal point position n having with the best detection result is set to the initial decimal point position $n_{opt\_first}$ common to all layers.

Specifically, first, object detection is performed for each input image while changing decimal point positions n of all layers in order from an initial value $n_{init}$ to a maximum value $n_{max}$, and a total number of detections $N_d$ and a detection accuracy A are saved for each decimal point position (step A1). Then, a detection accuracy A per detected object, that is, an average value $(\Sigma A/N_d)$ of the detection accuracy A is obtained from the total number of detections $N_d$ and the detection accuracy A obtained for each decimal point position, and a decimal point position n at which the average value of the detection accuracy A is maximized is set as the initial decimal point position $n_{opt\_first}$ (step A2) .

The initial value $n_{init}$ and the maximum value $n_{max}$ are determined by a device designer and do not limit the present invention.

Although a method for determining an initial value using a plurality of input images has been described as an example of the method for determining the initial decimal point position $(n_{opt\_first})$, the present invention is not limited to thereto. For example, the range of a feature map, which is an output result, may be analyzed in advance with respect a plurality of images using an object detection simulator or the like, and the initial decimal point position may be determined based on analysis results.

In addition, although "decimal point position having the best detection result" is defined as "decimal point position at which the average value of detection accuracy is maximized", the definition is not limited to thereto. For example, "decimal point position having the largest number of detections" may be set as "decimal point position having the best detection result".

[Step C: Determination of decimal point position $(n_{opt\_i})$ of i layer]

Fig. 7 shows a flow for determining a decimal point position of each layer constituting a multilayered neural network. Here, a method of sequentially determining decimal point positions using results of detection of two input images with respect to one layer one layer by one layer from a 0th layer will be described.

In the process of sequentially optimizing decimal point positions of fixed-length data for a plurality of layers, an input image may change significantly. If the image changes significantly, optimum decimal point positions may also change. Therefore, the decimal point position control unit 202 of the object detection device 20 according to the present embodiment is configured to first determine image change before searching for an optimum value of a decimal point position for each layer from the 0th layer to the $i_{max}$ layer (step CE), and if there is a significant change in an image (step CF: YES), to return to step A in Fig. 5 to start over from determination of the initial decimal point position $(n_{opt\_first})$. Meanwhile, the image change determination method will be described later in accordance with step E in Fig. 5.

On the other hand, if there is no significant change in the image as a result of determining image change (step CE) (step CF: NO), the following operation is performed for each layer.

Regarding a certain layer (i layer), first, a value obtained by adding 1 to a previously determined initial decimal point position $n_{opt\_first}$ (step A in Fig. 5) (shifting the decimal point position to the right by 1 bit) is set to a decimal point position (step C1). At this time, decimal point positions of other layers are not changed. In this state, object detection is performed on the first input image, and a total number of detections $N_d$ and a detection accuracy A are saved (step C2).

Next, the decimal point position of the layer (i layer) of interest is set to a decimal point position obtained by adding -1 to the initial decimal point position $n_{opt\_first}$ (shifting the decimal point position to the left by 1 bit) (step C3). At this time, decimal point positions of other layers are not changed. In this state, object detection is performed on the second input image, and a total number of detections $N_d$ and a detection accuracy A are saved (step C4).

The two results obtained in this way are compared to the result obtained when the decimal point position is set to $n_{opt\_first}$, and a decimal point position having the largest total number of detections $N_d$ is set as a decimal point position $n_{opt\_i}$ corresponding to that layer. If $n_{opt\_i}$ is not uniquely determined, detection accuracies A per detected object, that is, average values $(\Sigma A/N_d)$ of the detection accuracies A, are compared, and a decimal point position having the largest average value of the detection accuracies A is set as the decimal point position $n_{opt\_i}$ of the i layer (step C5).

For example, in the case of sequentially determining the decimal point position of each layer from the 0th layer first, when the initial decimal point position $n_{opt\_first}$ of the initial 0th layer is shifted by $\pm 1$ bit, the decimal point position $n_{opt\_0}$ of the 0th layer is determined based on a total number of detections Nd and detection accuracy A obtained by performing object detection with the decimal point position of each layer from the first to $i_{max}$ layers set to $n_{opt\_first}$ (steps C1 to C5). Then, at the time of determining $n_{opt\_1}$ of the next first layer, the decimal point position of the 0th layer is set to $n_{opt\_0}$ and processing from step C1 to step C5 is executed for the second and subsequent layers using the decimal point position $n_{opt\_first}$ unless there is a significant change in the image. Such processing is repeated until the $i_{max}$ layer to optimize the decimal point positions of all layers.

Although a flow in which the 0th layer on the input side is the starting point of optimization is shown as a specific example in the present embodiment, the method of determining the decimal point position ($n_{opt\_i}$) of the i layer is not limited to thereto. For example, the final layer on the output side may be the starting point, or any layer may be randomly determined as the starting point.

Further, although an example of obtaining the decimal point position of each layer from the results of object detection obtained when $\pm 1$ is added to the initial decimal point position $n_{opt\_first}$ has been described in the present embodiment, shifting of the decimal point position is not limited to thereto. For example, not only the detection results obtained when $\pm 1$ is added to the initial value but also results of object detection obtained when $\pm 2$ is added may be compared.

[Step E: Image change check]

Next, a flow of a method of determining image change check (step E in the flow shown in Fig. 5 and step CE in the flow shown in Fig. 7) will be described with reference to Fig. 8A and Fig. 8B.

In the present embodiment, the total number of detects ($N_d$) or the attribute ($N_{obj}$) among object detection results obtained by the object detection arithmetic operation unit 101 is used for image change check.

Fig. 8A is a flowchart showing determination processing using the total number of detections $N_d$. Here, a change in the number of detected objects (total number of detections $N_d$) is observed regardless of the attribute of the detected objects. Although the total number of detections Nd is considered to momentarily change in a video composed of a series of a plurality of images, when the rate of change is 0 (step E11: NO) or low (step E12: NO), it is determined as "no image change" or "insignificant change". When the rate of change is greater than a predetermined threshold value (step E12: YES), it is determined as "significant change". Specifically, it is determined whether the rate of change is less or greater than the predetermined threshold value using the following formula.

$$|N_{d\_after} - N_{d\_before}| / N_{d\_before} < N_{d\_th}$$

Here, $N_{d\_after}$ is a total number of detections after the decimal point position is moved, and $N_{d\_before}$ is a total number of detections decided in step B and step D in Fig. 5. $N_{d\_th}$ is a threshold value for the total number of detections (detection number threshold value). This detection number threshold value may be appropriately determined by a device designer. By determining image change using the rate of change of the total number of detections $N_d$, for example, when a large object appears in an image, it can be determined as a "significant change", and in this case, processing can be returned to step A of Fig. 5 to perform decimal point position optimization again.

On the other hand, Fig. 8B is a flowchart showing determination processing using the attribute ($N_{obj}$) of a detected object. In the determination method using the attribute $N_{obj}$ of an object, it is observed whether a new attribute has been added to an image (step E21), the ratio of number of detections of the object having the attribute $N_{obj}$ to the total number of detections $N_d$ is determined (step E22) when the new attribute has been added (step E21: YES), and "no change", "insignificant change" or "significant change" is identified. A threshold value ($N_{obj\_th}$) used for determination may be appropriately determined by the device designer. By performing observation using the ratio of the number of detections of the new attribute $N_{obj}$ to the total number of detections $N_d$, for example, when the number of detections in an image is originally small, it can be determined as "significant change" when a new attribute has been added.

Although the determination method using the total number of detections $N_d$ and the determination method using the attribute $N_{obj}$ have been separately described in the present embodiment, both may be combined as an image change determination method.

Further, although the method of using image change determination (step CE in Fig. 7) as a start trigger of decimal point position optimization processing has been described in the present embodiment, the present invention is not limited to thereto. For example, decimal point position optimization processing may be performed again after a certain period of time has elapsed.

In addition, although the procedure of returning to step A in Fig. 5 to start over initial value setting again when a result of image change check shown in step E in Fig. 5 and step CE in Fig. 7 is "there is a significant change" has been described in the present embodiment, the present invention is not limited to thereto, and a flow in which processing of returning to step C in Fig. 5 and executing step C1 to step C5 in Fig. 7 using the latest decimal point position as the initial value is performed may be employed, for example. Alternatively, if the result of image change check is "there is a significant change", branching conditions may be further provided and a flow of returning to either step A or step C shown in Fig. 5 may be employed.

As described above, by repeating determination of a decimal point position of fixed-length data that is an arithmetic processing target of each layer based on object detection results for each input image, the range and the minimum step width of data of each layer are always optimized, and thus object detection can be performed without deterioration of detection accuracy.

[Third embodiment]

In the second embodiment, it may take a time for optimization when an object detection algorithm having many layers is used because a decimal point position is optimized for one layer at a time. On the other hand, in a third embodiment, a configuration in which a plurality of layers can be optimized at a time instead of optimizing one layer at a time is employed.

Fig. 9 shows a configuration of an object detection device 30 according to the third embodiment. The object detection device 30 according to the third embodiment further includes an upper limit value/lower limit value counter 303 in addition to the object detection arithmetic operation unit 101 and the decimal point position control unit 302.

Here, the upper limit value/lower limit value counter 303 is a general term for an upper limit counter and a lower limit counter configured to count, for each layer, a number of times data exceeding an upper limit and a lower limit of a range, respectively, the range determined by decimal point positions set by the decimal point position control unit 302 in the process of arithmetic processing performed by the object detection arithmetic operation unit 101. Therefore, a measured value of the number of times the data exceeding the upper limit and the lower limit of the range determined by the decimal point positions set by the decimal point position control unit 302 becomes a value of the upper limit value/lower limit value counter 303.

In the object detection device 30 according to the present embodiment, the decimal point position control unit 302 sets a decimal point position of each layer based on the value of the upper limit value/lower limit value counter 303 and notifies the object detection arithmetic operation unit 101 of the decimal point position. The object detection arithmetic operation unit 101 changes the decimal point position of each layer based on the notification.

Fig. 10 shows a processing flow for determining the decimal point position ($n_{opt\_i}$) of each layer using the upper limit value/lower limit value counter 303. Here, the value UP of the upper limit value counter is the number of times fixed-length data handled in each layer exceeding an upper limit of a range determined by an initial value $n_{init}$ of the decimal point position of the corresponding layer. Further, the value UN of the lower limit value counter is the number of times the fixed-length data handled in each layer falling below a lower limit of the range determined by the initial value $n_{init}$ of the decimal point position of the corresponding layer.

First, regarding a layer for which the value UP of the upper limit value counter and the value UN of the lower limit value counter are less than a first threshold value $UP_{th}$ and a second threshold value $UN_{th}$ ($UP_{th}$, $UN_{th} \geqq 0$), respectively, as a result of object detection performed with the decimal point position of each layer set as the initial value $n_{init}$, this layer is regarded as a "layer with an optimized decimal point position" and decimal point positions of layers other than this layer are controlled without changing the decimal point position of this layer (step C1a of Fig. 10).

At this time, the threshold value $UP_{th}/UN_{th}$ ($\geqq 0$) is a numerical value that can be set for each layer. Further, only when the threshold value $UP_{th}/UN_{th}$ is set to 0, conditions of the "optimized layer" in step C1a of Fig. 10 is changed to upper limit value/lower limit value counter value = 0. In step C2a of Fig. 10, the decimal point positions of "non-optimized layer" are changed. Specifically, the decimal point positions of non-optimized layers are changed whenever an image is input such that values of the upper limit value/lower limit value counter of these layers are within the above-mentioned conditions, that is, the value UP of the upper limit value counter and the value UN of the lower limit value counter become less than the threshold value $UP_{th}$ and the threshold value $UN_{th}$.

For example, the upper limit value counter is focused first, and an upper limit value counter value is changed to be less than $UP_{th}$. After the upper limit counter is optimized, a lower limit value counter value is changed to be less than $UN_{th}$. Image change check shown in Fig. 8A or Fig. 8B is performed in the process of changing these values (step C3E), and processing returns to the initial value determination step of step A of Fig. 5 if it is determined that there is a significant change in the image (step C3F: YES). If it is not determined that there is a significant change in the image (step C3F: NO), processing proceeds to step D shown in Fig. 5 with the decimal point position set to the optimum position $n_{opt\_i}$ when the upper limit counter value and the lower limit counter value converge. Regarding layers for which any of the upper limit counter values and the lower limit counter values is the threshold value or less as a result of control based on the upper limit value counter and the lower limit value counter, it is determined which condition (less than $UP_{th}$ or less than $UN_{th}$) is prioritized in advance for each layer, and a case that meets the prioritized condition is regarded as an "optimized decimal point position".

In the process of step C2a shown in Fig. 10, if a layer whose upper limit/lower limit counter values determined in step C1a shown in Fig. 10 does not meet the conditions appears, the decimal point position of this layer is also included in control targets in step C2a shown in Fig. 10.

The method capable of controlling a plurality of layers at a time using the upper limit/lower limit value counter has been described above. Accordingly, it is possible to determine the optimum decimal point position for each layer by using only a few input images.

Meanwhile, above description of step C2a shown in Fig. 10 is an example of a method for optimizing the decimal point position of each layer using the upper limit value/lower limit value counter 303 and is not limited thereto. For example, control using the lower limit counter value may be started first, or a plurality of layers constituting a multilayered neural network may be grouped into a first half layer and a second half layer (for example, a feature extraction part and a recognition part), the first half layer may be controlled based on only the upper limit counter value, and the second half layer may be controlled based on both the upper limit value/lower limit value counters.

[Fourth embodiment]

Next, a fourth embodiment of the present invention will be described with reference to Fig. 11.

In the third embodiment described above, the upper limit value/lower limit value counter 303 that counts, for each layer, the number of times fixed-length data handled in arithmetic processing of each layer exceeding or falling below the range determined by the decimal point position of the corresponding layer is provided, and a time taken to optimize the decimal point position of each layer can be reduced by using the values of the upper limit value/lower limit value counter. However, it is conceivable that object detection results in the middle of processing are better than object detection results obtained as a result of converging the values of the upper limit value/lower limit value counter 303 to the threshold values or less.

In the fourth embodiment, while the basic configuration of the object detection device is the same as that of the object detection device 30 according to the third embodiment shown in Fig. 9 in that the upper limit value/lower limit value counter 303 is provided, more optimum decimal point positions are determined by using a combination of both "detection results" such as the total number of detections Nd used in the second embodiment and the values of "upper limit value/lower limit value counter" used in the third embodiment as parameters used by the decimal point position control unit 302 for decimal point position optimization.

For example, as shown in Fig. 11, the value UP of the upper limit value counter and the value UN of the lower limit value counter are compared with the threshold value $UP_{th}$ and the threshold value $UN_{th}$ to select "a layer with an optimized decimal point position" and a layer requiring decimal point position control (step C1a), then decimal point positions are determined using the value of the upper limit value counter and the value of the lower limit value counter as in the above-described third embodiment (step C21a), detection results (A, Nd) obtained in that process are additionally saved (step C22a), and a decimal point position that brings about the best result among the saved results is selected (step C23a). By comparing the saved detection results in this way, it is possible to determine the decimal point position as the "optimum decimal point position" when the best detection result has been obtained in the past. The results may be saved for each image or for several images.

[Fifth embodiment]

Next, an object detection device according to a fifth embodiment of the present invention will be described with reference to Fig. 12.

In the second to fourth embodiments described above, one decimal point position control unit is provided for one object detection device. In the case of these configurations, one decimal point position control method is defined for any type of image, and thus detection accuracy may deteriorate if there is an optimum decimal point position control method for each image.

Therefore, an object detection device 40 according to the fifth embodiment includes an object detection arithmetic operation unit 101 configured to detect an object involved in an input image according to a processing algorithm of a multilayered neural network, a plurality of decimal point position control units 402-1 to 402-m respectively configured to set decimal point positions of fixed-length data corresponding to a plurality of layers constituting the multilayered neural network based on the output of the object detection arithmetic operation unit 101 and to notify the object detection arithmetic operation unit 101 of the decimal point positions, and a control method determination unit 404 that selects any of the aforementioned plurality of decimal point position control units 402-1 to 402-m for each of the plurality of layers of the multilayered neural network based on the output of the object detection arithmetic operation unit 101. The object detection device 40 differs from the above-described object detection device 30 according to the third embodiment in that the former includes the plurality of decimal point position control units 402-1 to 402-m and the control method determination unit 404 that selects any of these decimal point position control units.

The control method determination unit 404 switches the plurality of decimal point position control units 402-1 to 402-m based on, for example, an input image type. A switching trigger may be, for example, "presence of significant image change" determined by a decimal point position control unit, and is not limited to thereto.

By selecting an appropriate one from the plurality of decimal point position control units 402-1 to 402-m that control the decimal point position of each layer through different methods in this way, it is possible to set decimal point positions of fixed-length data more appropriately and within a short time.

The decimal point position control units 102, 202, 302, and 402-1 to 402-m, the control method determination unit 404, and the like described above can be realized by installing a computer program that controls these hardware resources in a computer 50 including an arithmetic operation device 501, a storage device 502, an interface (I/F) circuit 503, and the like which are connected via a bus 504 such that they can communicate, for example, as shown in Fig. 13.

[Industrial Applicability]

The present invention is used for an object detection device and other data processors.

[Reference Signs List]

10, 20, 30, 40 Object detection device
101 Object detection arithmetic operation unit
102, 202, 302, 402-1 to 402-mDecimal point position control unit
303 Upper limit value/lower limit value counter
404 Control method determination unit

**Claims**

1. A data processor comprising:

    a decimal point position control circuit configured to set a decimal point position of N-bit (N is a natural number of 2 or more) fixed-length data corresponding to each of a plurality of layers constituting a multilayered neural network; and
    an arithmetic processing circuit configured to perform arithmetic processing corresponding to each of the plurality of layers constituting the multilayered neural network according to a processing algorithm of the multilayered neural network on the N-bit fixed-length data for which the decimal point position has been set by the decimal point position control circuit,
    **characterized in that**

    the decimal point position control circuit is configured to check for a change in continuously input images based on outputs of the arithmetic processing circuit and to re-set the decimal point position when the change exceeds a threshold value, and
    the decimal point position control circuit is configured to check for the change in the images using a rate of change in a total number of detections, which is a number of objects detected in each of the images, and/or a ratio of a number of objects having a new attribute to the total number of detections.

2. The data processor according to claim 1, further comprising

    an upper limit counter and a lower limit counter configured to count numbers of times data crosses an upper limit and a lower limit of a range, respectively, the range determined according to the decimal point position set by the decimal point position control circuit, in a process of arithmetic processing corresponding to each of the plurality of layers constituting the multilayered neural network performed by the arithmetic processing circuit, wherein
the decimal point position control circuit is configured to set the decimal point position of the fixed-length data corresponding to each of the plurality of layers constituting the multilayered neural network based on a value of the upper limit counter and a value of the lower limit counter.

3. The data processor according to claim 2, further comprising a storage device configured to store a first threshold value for the value of the upper limit counter and a second threshold value for the value of the lower limit counter set to correspond to each of the plurality of layers constituting the multilayered neural network, wherein
the decimal point position control circuit is configured to control the decimal point position of the fixed-length data such that the value of the upper limit counter and the value of the lower limit counter each fall within a range of 0 to the first threshold value and a range of 0 to the second threshold value.

4. The data processor according to claim 2, wherein the decimal point position control circuit is configured to set the decimal point position of the fixed-length data corresponding to each of the plurality of layers constituting the multilayered neural network based on the value of the upper limit counter, the value of the lower limit counter, and the output of the multilayered neural network.

5. The data processor according to claim 1, further comprising:

    a plurality of decimal point position control circuits each configured to set the position of the decimal point of the fixed-length data corresponding to each of the plurality of layers constituting the multilayered neural network based on the output of the multilayered neural network; and
    a control method determination circuit configured to select any one of the plurality of decimal point position control circuits for each of the plurality of layers constituting the multilayered neural network based on the output of the multilayered neural network, wherein
    the arithmetic processing circuit is configured to perform arithmetic processing corresponding to each of the plurality of layers constituting the multilayered neural network according to a processing algorithm of the multilayered neural network on the N-bit fixed-length data for which the decimal point position has been set by any one of the plurality of decimal point position control circuits selected by the control method determination circuit.

6. The data processor according to any one of claims 1 to 5, wherein the multilayered neural network is configured to output metadata from an input image, the metadata including an attribute of an object involved in the input image, detection accuracy of the attribute, and a location of the object in the image.

7. A data processing method comprising:

a first step of setting a decimal point position of N-bit (N is a natural number of 2 or more) fixed-length data corresponding to each of a plurality of layers constituting a multilayered neural network; and
a second step of performing arithmetic processing corresponding to each of the plurality of layers constituting the multilayered neural network according to a processing algorithm of the multilayered neural network on the N-bit fixed-length data for which the decimal point position has been set in the first step,
**characterized in that**
the first step includes:

a step of checking for a change in continuously input images based on results of the arithmetic processing, and
a step of re-setting the decimal point position when the change exceeds a threshold value, and

the second step includes:

a step of checking for the change in the images using a rate of change in a total number of detections, which is a number of objects detected in each of the images, and/or
a step of checking for the change in the images using a ratio of a number of objects having a new attribute to the total number of detections.

**Patentansprüche**

1. Datenprozessor, umfassend:

eine Dezimalpunktpositionssteuerschaltung, die so konfiguriert ist, dass sie eine Dezimalpunktposition von N-Bit-Daten (N ist eine natürliche Zahl größer oder gleich 2) fester Länge entsprechend jeder einer Vielzahl von Schichten, die ein mehrschichtiges neuronales Netzwerk bilden, einstellt; und
eine Schaltung für arithmetische Verarbeitung, die so konfiguriert ist, dass sie eine arithmetische Verarbeitung entsprechend jeder der mehreren Schichten, die das mehrschichtige neuronale Netzwerk bilden, gemäß einem Verarbeitungsalgorithmus des mehrschichtigen neuronalen Netzwerks an den N-Bit-Daten fester Länge durchführt, für die die Dezimalpunktposition durch die Dezimalpunktpositionssteuerschaltung gesetzt wurde,
**dadurch gekennzeichnet, dass**
die Dezimalpunktpositionssteuerschaltung so konfiguriert ist, dass sie auf der Grundlage von Ausgangssignalen der Schaltung für arithmetische Verarbeitung auf eine Änderung in kontinuierlich eingegebenen Bildern prüft und die Dezimalpunktposition neu einstellt, wenn die Änderung einen Schwellenwert überschreitet, und
die Dezimalpunktpositionssteuerschaltung so konfiguriert ist, dass sie auf die Änderung in den Bildern unter Verwendung einer Änderungsrate in einer Gesamtzahl von Erfassungen, die eine Anzahl von Objekten ist, die in jedem der Bilder erfasst werden, und/oder eines Verhältnisses einer Anzahl von Objekten mit einem neuen Attribut zu der Gesamtzahl von Erfassungen prüft.

2. Datenprozessor nach Anspruch 1, ferner umfassend einen Obergrenzenzähler und einen Untergrenzenzähler, die so konfiguriert sind, dass sie die Anzahl der Male zählen, die Daten eine Obergrenze bzw. eine Untergrenze eines Bereichs überschreiten, wobei der Bereich gemäß der Dezimalpunktposition bestimmt wird, die durch die Dezimalpunktpositionssteuerschaltung in einem Prozess für arithmetische Verarbeitung entsprechend jeder der mehreren Schichten, die das mehrschichtige neuronale Netzwerk bilden, festgelegt wird, der durch die Schaltung für arithmetische Verarbeitung durchgeführt wird, wobei
die Dezimalpunktpositionssteuerschaltung so konfiguriert ist, dass sie die Dezimalpunktposition der Daten fester Länge entsprechend jeder der mehreren Schichten, die das mehrschichtige neuronale Netzwerk bilden, auf der Grundlage eines Wertes des Obergrenzenzählers und eines Wertes des Untergrenzenzählers festlegt.

3. Datenprozessor nach Anspruch 2, ferner umfassend eine Speichervorrichtung, die so konfiguriert ist, dass sie einen ersten Schwellenwert für den Wert des Obergrenzenzählers und einen zweiten Schwellenwert für den Wert des Untergrenzenzählers speichert, die so eingestellt sind, dass sie jeder der mehreren Schichten entsprechen, die das mehrschichtige neuronale Netzwerk bilden, wobei die Dezimalpunktpositionssteuerschaltung so konfiguriert ist, dass sie die Dezimalpunktposition der Daten fester Länge so steuert, dass der Wert des Obergrenzenzählers und der Wert des Untergrenzenzählers jeweils in einen Bereich von 0 bis zum ersten Schwellenwert und in einen Bereich von 0 bis zum zweiten Schwellenwert fallen.

4. Datenprozessor nach Anspruch 2, wobei die Dezimalpunktpositionssteuerschaltung so konfiguriert ist, dass sie die Dezimalpunktposition der Daten fester Länge entsprechend jeder der mehreren Schichten, die das mehrschichtige neuronale Netzwerk bilden, auf der Grundlage des Werts des Obergrenzenzählers, des Werts des Untergrenzenzählers und der Ausgabe des mehrschichtigen neuronalen Netzwerks einstellt.

5. Datenprozessor nach Anspruch 1, ferner umfassend

   eine Vielzahl von Dezimalpunktpositionssteuerschaltungen, die jeweils so konfiguriert sind, dass sie die Position des Dezimalpunkts der Daten fester Länge entsprechend jeder der Vielzahl von Schichten, die das mehrschichtige neuronale Netzwerk bilden, auf der Grundlage der Ausgabe des mehrschichtigen neuronalen Netzwerks einstellen; und
   eine Steuerverfahren-Bestimmungsschaltung, die dazu konfiguriert ist, eine beliebige der Vielzahl von Dezimalpunktpositions-Steuerschaltungen für jede der Vielzahl von Schichten, die das mehrschichtige neuronale Netzwerk bilden, auf der Grundlage der Ausgabe des mehrschichtigen neuronalen Netzwerks auszuwählen, wobei
   die Schaltung für arithmetische Verarbeitung dazu konfiguriert ist, eine arithmetische Verarbeitung entsprechend jeder der Vielzahl von Schichten, die das mehrschichtige neuronale Netzwerk bilden, gemäß einem Verarbeitungsalgorithmus des mehrschichtigen neuronalen Netzwerks an den N-Bit-Daten fester Länge durchzuführen, für die die Dezimalpunktposition durch eine beliebige aus der Vielzahl von Dezimalpunktpositionssteuerschaltungen, die durch die Steuerverfahren-Bestimmungsschaltung ausgewählt wurden, festgelegt wurde.

6. Datenprozessor nach einem der Ansprüche 1 bis 5, wobei das mehrschichtige neuronale Netzwerk so konfiguriert ist, dass es Metadaten aus einem Eingangsbild ausgibt, wobei die Metadaten ein Attribut eines in dem Eingangsbild vorkommenden Objekts, die Erkennungsgenauigkeit des Attributs und einen Ort des Objekts in dem Bild enthalten.

7. Datenverarbeitungsverfahren, umfassend:

   einen ersten Schritt des Setzens einer Dezimalpunktposition von N-Bit-Daten (N ist eine natürliche Zahl größer oder gleich 2) fester Länge, die jeder aus einer Vielzahl von Schichten entsprechen, die ein mehrschichtiges neuronales Netzwerk bilden; und
   einen zweiten Schritt des Durchführens einer arithmetischen Verarbeitung entsprechend jeder der Vielzahl von Schichten, die das mehrschichtige neuronale Netzwerk bilden, gemäß einem Verarbeitungsalgorithmus des mehrschichtigen neuronalen Netzwerks an den N-Bit-Daten fester Länge, für die die Dezimalpunktposition in dem ersten Schritt eingestellt wurde,

   **dadurch gekennzeichnet, dass**
   der erste Schritt umfasst:

   einen Schritt des Prüfens auf eine Änderung in kontinuierlich eingegebenen Bildern basierend auf Ergebnissen der arithmetischen Verarbeitung, und
   einen Schritt des Neueinstellens der Dezimalpunktposition, wenn die Änderung einen Schwellenwert überschreitet, und
   der zweite Schritt umfasst:

   einen Schritt des Prüfens auf die Änderung in den Bildern unter Verwendung einer Änderungsrate in einer Gesamtzahl von Erfassungen, die eine Anzahl von Objekten ist, die in jedem der Bilder erfasst werden, und/oder
   einen Schritt des Prüfens auf die Änderung in den Bildern unter Verwendung eines Verhältnisses zwischen der Anzahl der Objekte mit einem neuen Attribut und der Gesamtzahl der Erfassungen.

**Revendications**

1. Processeur de données comportant :

   un circuit de commande de position de signe décimal configuré pour définir une position de signe décimal de données de longueur fixe à N bits (N est un nombre entier naturel de 2 ou plus) correspondant à chacune d'une pluralité de couches constituant un réseau de neurones multicouches ; et
   un circuit de traitement arithmétique configuré pour réaliser un traitement arithmétique correspondant à chacune de la pluralité de couches constituant le réseau de neurones multicouches selon un algorithme de traitement du réseau de neurones multicouches sur les données de longueur fixe à N bits pour lesquelles la position de signe décimal a été définie par le circuit de commande de position de signe décimal, **caractérisé en ce que**

le circuit de commande de position de signe décimal est configuré pour vérifier un changement dans des images entrées en continu sur la base de sorties du circuit de traitement arithmétique et pour redéfinir la position de signe décimal lorsque le changement dépasse une valeur seuil, et

le circuit de commande de position de signe décimal est configuré pour vérifier le changement dans les images à l'aide d'un taux de changement dans un nombre total de détections, qui est un nombre d'objets détectés dans chacune des images, et/ou un rapport d'un nombre d'objets ayant un nouvel attribut sur le nombre total de détections.

2. Processeur de données selon la revendication 1, comportant en outre :

un compteur de limite supérieure et un compteur de limite inférieure configurés pour compter des nombres d'occurrences où les données franchissent une limite supérieure et une limite inférieure d'une plage, respectivement, la plage étant déterminée selon la position de signe décimal définie par le circuit de commande de position de signe décimal, dans un processus de traitement arithmétique correspondant à chacune de la pluralité de couches constituant le réseau de neurones multicouches réalisé par le circuit de traitement arithmétique, dans lequel le circuit de commande de position de signe décimal est configuré pour définir la position de signe décimal des données de longueur fixe correspondant à chacune de la pluralité de couches constituant le réseau de neurones multicouches sur la base d'une valeur du compteur de limite supérieure et d'une valeur du compteur de limite inférieure.

3. Processeur de données selon la revendication 2, comportant en outre un dispositif de stockage configuré pour stocker une première valeur seuil pour la valeur du compteur de limite supérieure et une seconde valeur seuil pour la valeur du compteur de limite inférieure, définies pour correspondre à chacune de la pluralité de couches constituant le réseau de neurones multicouches, dans lequel le circuit de commande de position de signe décimal est configuré pour commander la position de signe décimal des données de longueur fixe de sorte que la valeur du compteur de limite supérieure et la valeur du compteur de limite inférieure se situent chacune au sein d'une plage de 0 à la première valeur seuil et d'une plage de 0 à la seconde valeur seuil.

4. Processeur de données selon la revendication 2, dans lequel le circuit de commande de position de signe décimal est configuré pour définir la position de signe décimal des données de longueur fixe correspondant à chacune de la pluralité de couches constituant le réseau de neurones multicouches sur la base de la valeur du compteur de limite supérieure, de la valeur du compteur de limite inférieure, et de la sortie du réseau de neurones multicouches.

5. Processeur de données selon la revendication 1, comportant en outre :

une pluralité de circuits de commande de position de signe décimal configurés chacun pour définir la position du signe décimal des données de longueur fixe correspondant à chacune de la pluralité de couches constituant le réseau de neurones multicouches sur la base de la sortie du réseau de neurones multicouches ; et un circuit de détermination de procédé de commande configuré pour sélectionner l'un quelconque de la pluralité de circuits de commande de position de signe décimal pour chacune de la pluralité de couches constituant le réseau de neurones multicouches sur la base de la sortie du réseau de neurones multicouches, dans lequel

le circuit de traitement arithmétique est configuré pour réaliser un traitement arithmétique correspondant à chacune de la pluralité de couches constituant le réseau de neurones multicouches selon un algorithme de traitement du réseau de neurones multicouches sur les données de longueur fixe à N bits pour lesquelles la position de signe décimal a été définie par l'un quelconque de la pluralité de circuits de commande de position de signe décimal sélectionné par le circuit de détermination de procédé de commande.

6. Processeur de données selon l'une quelconque des revendications 1 à 5, dans lequel le réseau de neurones multicouches est configuré pour délivrer en sortie des métadonnées provenant d'une image d'entrée, les métadonnées incluant un attribut d'un objet impliqué dans l'image d'entrée, une précision de détection de l'attribut et un emplacement de l'objet dans l'image.

7. Procédé de traitement de données comportant :

une première étape consistant à définir une position de signe décimal de données de longueur fixe à N bits (N est un nombre entier naturel de 2 ou plus) correspondant à chacune d'une pluralité de couches constituant un réseau de neurones multicouches ; et
une seconde étape consistant à réaliser un traitement arithmétique correspondant à chacune de la pluralité de couches constituant le réseau de neurones multicouches selon un algorithme de traitement du réseau de neurones multicouches sur les données de longueur fixe à N bits pour lesquelles la position de signe décimal a été définie à la première étape,
**caractérisé en ce que**
la première étape inclut :

une étape de vérification d'un changement dans des images entrées en continu sur la base de résultats du traitement arithmétique, et
une étape de redéfinition de la position de signe décimal lorsque le changement dépasse une valeur seuil, et
la seconde étape inclut :

une étape de vérification du changement dans les images à l'aide d'un taux de changement dans un nombre total de détections, qui est un nombre d'objets détectés dans chacune des images, et/ou
une étape de vérification du changement dans les images à l'aide d'un rapport d'un nombre d'objets ayant un nouvel attribut sur le nombre total de détections.

Fig. 1

Fig. 2

Fig. 3

TO INPUT OF NEXT LAYER

INPUT (8bit)

WEIGHT(8bit)

⊗

OUTPUT
(16bit)

BIAS ADDITION
ACTIVATION
FUNCTION

···

INTERMEDIATE
FEATURE MAP
(16bit)

FEATURE MAP (8bit)

16 BITS DURING CALCULATION

REDUCE 16 BITS
TO 8 BITS

Fig. 4

Fig. 5

START

A

Step A — DETERMINE INITIAL VALUE $n_{opt\_first}$ AND PERFORM OBJECT DETECTION

Step B — DECIDE NUMBER OF DETECTIONS ($N_d$) AND DETECTION ATTRIBUTE ($N_{obj}$)

Step C — DETERMINE DECIMAL POINT POSITION ($n_{opt\_i}$) OF i LAYER

Step D — DECIDE NUMBER OF DETECTIONS ($N_d$) AND DETECTION ATTRIBUTE ($N_{obj}$)

Step E — CHECK IMAGE CHANGE

Step F — THERE IS SIGNIFICANT CHANGE

NO

YES

Fig. 6

```
┌────────────────────────────────────────────┐
│   DETERMINATION OF INITIAL VALUE n_opt_first │
│          AND OBJECT DETECTION                │
└────────────────────────────────────────────┘
                      │
                      ▼
┌────────────────────────────────────────────┐
│       n = n_init, n ≦ n_max, n++            │
└────────────────────────────────────────────┘
┌────────────────────────────────────────────┐
│  PERFORM OBJECT DETECTION ARITHMETIC        │   ⌐Step A1
│ OPERATION AT SAME DECIMAL POINT POSITION (n)│
│   FOR ALL LAYERS, AND SAVE NUMBER OF        │
│ DETECTIONS (Nd) AND DETECTION ACCURACY (A)  │
└────────────────────────────────────────────┘
┌────────────────────────────────────────────┐
│                                            │
└────────────────────────────────────────────┘
                      │
                      ▼
┌────────────────────────────────────────────┐
│  EXTRACT n AT WHICH Σ A/N_d IS MAXIMIZED   │   ⌐Step A2
└────────────────────────────────────────────┘
                      │
                      ▼
              ┌──────────────┐
              │    RETURN     │
              └──────────────┘
```

20

Fig. 7

```
        ┌─────────────────────────────────┐
        │ DETERMINE DECIMAL POINT         │
        │ POSITION (n_opt_i) OF i LAYER   │
        └─────────────────────────────────┘
                        │
                        ▼
        ┌─────────────────────────────────┐
        │   i= 0,  i ≦ i_max,  i++         │
        └─────────────────────────────────┘
                        │
                        ▼                       Step CE
        ┌─────────────────────────────────┐
        │      CHECK IMAGE CHANGE         │
        └─────────────────────────────────┘
                        │
                        ▼          Step CF              YES
              ◇ THERE IS SIGNIFICANT CHANGE ◇ ──────────▶ (A)
                        │
                        │ NO
                        ▼
        ┌─────────────────────────────────┐  Step C1
        │ CHANGE TO n_opt_i = n_opt_first +1│
        └─────────────────────────────────┘
                        │
                        ▼
        ┌─────────────────────────────────┐  Step C2
        │ SAVE DETECTION RESULTS (A, N_d)  │
        │ OBTAINED WHEN n_opt_i = n_opt_first +1│
        └─────────────────────────────────┘
                        │
                        ▼
        ┌─────────────────────────────────┐  Step C3
        │ CHANGE TO n_opt_i = n_opt_first -1│
        └─────────────────────────────────┘
                        │
                        ▼
        ┌─────────────────────────────────┐  Step C4
        │ SAVE DETECTION RESULTS (A, N_d)  │
        │ OBTAINED WHEN n_opt_i = n_opt_first -1│
        └─────────────────────────────────┘
                        │
                        ▼
        ┌─────────────────────────────────┐  Step C5
        │ COMPARE Σ A/N_d AND             │
        │ DETERMINE MAXIMUM VALUE AS n_opt_i│
        └─────────────────────────────────┘
                        │
                        ▼
        ┌─────────────────────────────────┐
        │                                 │
        └─────────────────────────────────┘
                        │
                        ▼
                   ( RETURN )
```

Fig. 8A

```
        ╭─────────────────────────────╮
        │    CHECK IMAGE CHANGE        │
        ╰─────────────────────────────╯
                      │
                      ▼
                                    Step E11
              ◇─────────────────────◇          NO    ┌──────────────┐
              │   HAS N_d CHANGED?   │─────────────▶ │  NO CHANGE   │
              ◇─────────────────────◇               └──────────────┘
                      │
                      │ YES
                      ▼
                                    Step E12
              ◇────────────────────────◇       NO   ┌──────────────┐
              │  |N_{d\_after} - N_{d\_before}|/N_{d\_before}  │──────────▶│ INSIGNIFICANT│
              │ <DETECTION NUMBER      │            │   CHANGE     │
              │ THRESHOLD VALUE (N_{d\_th}) │            └──────────────┘
              ◇────────────────────────◇
                      │
                      │ YES
                      ▼
              ┌──────────────┐
              │ SIGNIFICANT  │
              │   CHANGE     │
              └──────────────┘
```

Step E11

HAS $N_d$ CHANGED?

NO — NO CHANGE

YES

Step E12

$|N_{d\_after} - N_{d\_before}|/N_{d\_before}$ < DETECTION NUMBER THRESHOLD VALUE $(N_{d\_th})$

NO — INSIGNIFICANT CHANGE

YES

SIGNIFICANT CHANGE

Fig. 8B

```
              ╭──────────────────────────╮
              │   CHECK IMAGE CHANGE     │
              ╰──────────────────────────╯
                          │
                          ▼
                                  Step E21
                    ◇                              NO      ┌ ─ ─ ─ ─ ─ ─ ┐
          HAS NEW N_obj BEEN ADDED?    ──────────────────▶ │ NO CHANGE  │
                    ◇                                      └ ─ ─ ─ ─ ─ ─ ┘
                          │
                         YES
                          │
                          ▼
                                  Step E22
                    ◇                              NO      ┌ ─ ─ ─ ─ ─ ─ ┐
           RATIO OF NEW N_obj                      ──────▶ │INSIGNIFICANT│
          TO TOTAL < ATTRIBUTE                             │  CHANGE     │
          THRESHOLD (N_obj_th)                             └ ─ ─ ─ ─ ─ ─ ┘
                    ◇
                          │
                          ▼
                   ┌ ─ ─ ─ ─ ─ ─ ┐
                   │ SIGNIFICANT │
                   │  CHANGE     │
                   └ ─ ─ ─ ─ ─ ─ ┘
```

Fig. 9

Fig. 10

```
┌─────────────────────────────────────┐
│     DETERMINE DECIMAL POINT          │
│    POSITION (n_opt_i) OF i LAYER     │
└─────────────────────────────────────┘
                   │
                   ▼
┌─────────────────────────────────────┐
│   LEAVE LAYERS WITH 0<UPPER          │          Step C1a
│   LIMIT VALUE COUNTER<UP_th          │
│              AND                     │
│       0<LOWER LIMIT VALUE            │
│   COUNTER<UN_th AS THEY ARE          │
└─────────────────────────────────────┘
                   │
                   ▼
┌─────────────────────────────────────┐
│   OPTIMIZE UPPER LIMIT VALUE         │          Step C2a
│   COUNTER VALUE AND LOWER            │
│   LIMIT VALUE COUNTER VALUE          │
└─────────────────────────────────────┘
                   │
                   ▼                              Step C3E
┌─┤├───────────────────────────────┤├─┐
│        CHECK IMAGE CHANGE            │
└─┤├───────────────────────────────┤├─┘
                   │
                   ▼           Step C3F
              ◇─────────────────◇
         ◇                           ◇         YES
    ◇   THERE IS SIGNIFICANT CHANGE   ◇──────────────▶ (A)
         ◇                           ◇
              ◇─────────────────◇
                   │
                   │ NO
                   ▼
            ┌──────────────┐
            │    RETURN     │
            └──────────────┘
```

25

Fig. 11

```
┌─────────────────────────────────┐
│   DETERMINE DECIMAL POINT        │
│   POSITION ($n_{opt\_i}$) OF i LAYER  │
└─────────────────────────────────┘
              │
              ▼
┌─────────────────────────────────┐
│   LEAVE LAYERS WITH 0<UPPER      │
│   LIMIT VALUE COUNTER<$UP_{th}$      │        Step C1a
│         AND                      │
│   0<LOWER LIMIT VALUE            │
│   COUNTER<$UN_{th}$ AS THEY ARE     │
└─────────────────────────────────┘
              │
              ▼
┌─────────────────────────────────┐
│                                 │
└─────────────────────────────────┘
              │
              ▼
┌─────────────────────────────────┐
│   CHANGE DECIMAL POINT POSITIONS │
│   USING UPPER LIMIT VALUE        │       Step C21a
│   COUNTER VALUE AND LOWER        │
│   LIMIT VALUE COUNTER VALUE      │
└─────────────────────────────────┘
┌─────────────────────────────────┐
│   PERFORM OBJECT DETECTION AND   │       Step C22a
│   SAVE DETECTION RESULTS (A, $N_d$) │
└─────────────────────────────────┘
              │
              ▼
┌─────────────────────────────────┐
│                                 │
└─────────────────────────────────┘
              │
              ▼
┌─────────────────────────────────┐
│   COMPARE $\Sigma A/N_d$ AND        │       Step C23a
│   DETERMINE MAXIMUM VALUE AS $n_{opt\_i}$ │
└─────────────────────────────────┘
              │
              ▼
        ┌───────────┐
        │  RETURN   │
        └───────────┘
```

Fig. 12

Fig. 13

50 (402-1~402-m, 303, 403)

501
ARITHMETIC
OPERATION
DEVICE

502
STORAGE
DEVICE

504

503
I/F

101
OBJECT DETECTION
ARITHMETIC OPERATION
UNIT

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3640858 A1

**Non-patent literature cited in the description**

- **JOSEPH REDMON**. *YOLOv3: An Incremental Improvement*, https://arxiv.org/abs/1804.02767
- **WEI LIU**. *SSD: Single Shot MultiBox Detector*, https://arxiv.org/pdf/1512.02325.pdf

- **ZHISHENG LI**. Laius: An 8-Bit Fixed-Point CNN Hardware Inference Engine. *2017 IEEE International Symposium on Parallel and Distributed Processing with Applications and 2017 IEEE International Conference on Ubiquitous Computing and Communications (ISPA/IUCC), Guangzhou*, 2017, 143-150